# EUROPEAN PATENT APPLICATION

(11) **EP 4 804 024 A1**
(43) Date of publication of application: **09.09.2026**
(21) Application number: 26161287.3
(22) Date of filing: 27.02.2026
(51) Int. Cl.: G06F 9/48, G06F 9/50

(54) **SYSTEMS AND METHODS FOR IMPROVING COMPONENT ACCESS FOR CLOUD SERVICE USERS**

(30) Priority: 03.03.2025 US 202519069212
(71) Applicant: Capital One Services, LLC, McLean, Virginia 22102 (US)
(72) Inventor: SHARMA, Nitin, McLean, VA 22102 (US)
(74) Representative: Boult Wade Tennant LLP

(57) **Abstract**

Systems and methods for improving component access for cloud service users. The systems and methods allow for users to access additional cloud components through data layer operations such as routing table updates. Notably, the data layer may be modified by the cloud service users themselves and thus avoid restriction in inactivity by the cloud service provider.

## Description

### BACKGROUND

Cloud service providers deliver cloud service components to cloud service users through a variety of delivery models, which allow users to access computing resources, storage, and other infrastructure over the internet without needing to own or manage the underlying hardware. These services are typically offered in three main models: Infrastructure as a Service (IaaS), Platform as a Service (PaaS), and Software as a Service (SaaS). In an IaaS model, the cloud provider supplies fundamental resources like virtual machines (VMs), storage, networking, and processing power. Cloud users can select and configure these components based on their needs, scaling them up or down as required. In a PaaS model, the cloud provider offers a platform that includes both hardware and software tools that users can use to develop, run, and manage applications without worrying about the underlying infrastructure. The provider manages all the lower-level infrastructure, including operating systems, databases, and middleware, while the user focuses on building and deploying their applications. For SaaS, the provider delivers fully functioning applications over the internet, which the cloud service users can access directly from a web browser. Users do not manage or control the underlying infrastructure or platform; instead, they interact directly with the application provided by the cloud service.

Cloud service users are highly dependent on providers to maintain the essential components that enable their cloud services to operate reliably, securely, and efficiently. This reliance spans across several critical areas. First, users depend on providers to ensure the physical and virtual infrastructure-such as servers, storage systems, and networking components-remains functional and available, with minimal downtime. Providers are responsible for monitoring, upgrading, and addressing failures in the infrastructure, and users rely on this to maintain high availability as outlined in service level agreements (SLAs). Security is another key area, where users expect providers to manage patching, firewalls, encryption, and other protective measures to safeguard the system. Cloud users depend on providers to handle security threats and regularly apply updates to prevent vulnerabilities. Additionally, users rely on providers to optimize performance and scalability. Providers ensure that computing resources can be scaled dynamically to meet growing demands, and failure to maintain these resources can result in performance bottlenecks or an inability to scale.

### SUMMARY

Due to the aforementioned dependency, cloud service users have little recourse when components go off-line beyond simply waiting for the cloud service provider to fix the issue. Similarly, as device routing and load balancing is handled by the cloud service providers, users also have little ability to select a specific component for serving their application. Moreover, cloud service providers may restrict users to only certain component of available components to meet legal requirements, improve performance, optimize resource management, manage costs, and/or enhance security. As such, in some instances, users may have no access to cloud components when their predetermined subset of components go offline, even though other components are available.

Systems and methods are described herein for improving component access for cloud service users. Specifically, the systems and methods described allow for users to access additional cloud components through data layer operations such as routing table updates. Notably, the data layer may be modified by the cloud service users themselves and thus avoid restriction in inactivity by the cloud service provider.

However, the use of the data layer for failover system raises several technical challenges. For example, existing systems implement failover mechanism at the infrastructure layer or the application layer in cloud computing systems. At the infrastructure layer, failover mechanisms ensure the availability of physical or virtual resources such as servers, storage, and networking components. This layer handles load balancing, virtual machine redundancy, and network rerouting to prevent downtime. For instance, if a server or virtual machine fails, the infrastructure layer automatically shifts traffic or workloads to backup resources or other servers in different regions, ensuring that services remain available. At the application layer, failover mechanisms focus on maintaining the availability of the application itself. This includes distributing traffic across multiple instances of the application using load balancers, which detect when an instance fails and redirect requests to healthy instances.

In contrast, implementing a failover mechanism at the data layer raises novel technical challenges due to the complexities of maintaining data consistency, data integrity, and/or data redundancy such as database replication. The data layer is a challenging layer for implementing a failover mechanism due to the complexities involved in maintaining data consistency, integrity, and synchronization across distributed systems. Unlike the infrastructure or application layers, where failover often involves switching between stateless components, the data layer is inherently stateful. This means that it continuously processes and stores critical transactional data, making it difficult to replicate or transfer without risking data loss or corruption.

As such, the systems and methods described herein allow for users to access additional cloud components through data layer operations such as routing table updates. By using routing table updates, cloud service users gain control of cloud component selection irrespective of cloud service provider restrictions and/or inactivity. However, this data layer solution raises novel technical challenges. For example, failover at the data layer requires real-time replication across multiple databases or storage systems, which introduces significant challenges related to latency and synchronization. If a failover occurs during a transaction, there is a risk that data could become inconsistent or incomplete, leading to data integrity issues. Additionally, ensuring that all transactions are fully completed before switching to a backup system is a complex task, and managing in-progress operations across different nodes or regions further complicates the failover process.

Accordingly, while routing table updates can improve availability and ensure that services continue to function during a failure, triggering these updates from the user-side (as opposed to the provider-side) represents a novel technical challenge as dynamic routing table updates may create issues related to data consistency and synchronization. For example, even though traffic is redirected to a backup system, there is still a need to ensure that the data in the secondary system is fully synchronized with the primary database. If real-time replication is not perfectly aligned, there is a risk of data lag or inconsistency, where recent transactions may not have been fully replicated before the failover. This can result in incomplete or conflicting data in the secondary database. If a failover occurs while a transaction is in progress, routing table updates will not solve the problem of handling in-flight transactions. Accordingly, the systems and method include an additional data validation that is itself triggered by a user-generated routing table update. By doing so, the system can ensure that no issues related to data inconsistency and/or synchronization developed during the rerouting.

In some aspects, systems and methods for improving component access for cloud service users are described. For example, the system may serve, by a cloud service provider of a cloud computing network, a first cloud service user using a first stateful component in a data layer of the cloud computing network, wherein the first stateful component corresponds to a first geographic subset of components in the cloud computing network. The system may process, from the first cloud service user, a first request to change from the first stateful component to a second stateful component in the data layer, wherein the second stateful component corresponds to a second geographic subset of components in the cloud computing network. The system may, in response to processing the first request, update a routing table of the data layer to route future communications for the first cloud service user to the second stateful component. The system may, in response to updating the routing table, perform a first validation on a first communication for the first cloud service user, wherein the first communication was initiated prior to the first request being received.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram for a multi-layered architecture of a cloud service provider for a cloud computing network, in accordance with one or more embodiments.
FIG. 2 shows an illustrative diagram for switching between cloud components, in accordance with one or more embodiments.
FIG. 3 shows illustrative components for a system used to improve component access for cloud service users, in accordance with one or more embodiments.
FIG. 4 shows a flowchart of the steps involved in improving component access for cloud service users, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

Due to the aforementioned dependency, cloud service users have little recourse when components go off-line beyond simply waiting for the cloud service provider to fix the issue. Similarly, as device routing and load balancing is handled by the cloud service providers, users also have little ability to select a specific component for serving their application. Moreover, cloud service providers may restrict users to only certain component of available components to meet legal requirements, improve performance, optimize resource management, manage costs, and/or enhance security. As such, in some instances, users may have no access to cloud components when their predetermined subset of components go offline, even though other components are available.

For example, cloud service providers often restrict the specific components that a given user can access, such as limiting the use of servers to a particular geographic area or a predetermined group of resources, for several important reasons. One key factor is compliance with legal and regulatory requirements. Different countries and regions have strict data residency laws that dictate where data can be stored and processed. By restricting users to servers in specific geographic areas, cloud providers ensure that they and their customers comply with laws like the General Data Protection Regulation (GDPR) in Europe or other local regulations that require data to remain within certain borders.

Another reason for these restrictions is performance optimization. Cloud providers may restrict users to a specific group of servers that are geographically close to their location to reduce latency and improve the overall performance of services. Accessing servers that are physically closer to the user reduces the time it takes for data to travel between the user and the server, ensuring faster response times and better user experiences.

Resource management and cost control are also factors. By limiting access to specific resources or server groups, cloud providers can more efficiently allocate and manage their infrastructure. This helps avoid overloading certain data centers and ensures that users have access to the necessary resources without excessive costs or inefficiencies. Additionally, restricting users to a certain group of servers allows providers to apply customized pricing models based on geographic zones or resource types.

Security is another reason for these restrictions. By confining users to certain server groups, cloud providers can enforce stronger security controls and monitoring over those resources. This helps protect sensitive data by ensuring that it is only handled in trusted environments, which can be particularly important for customers in industries with high-security demands, such as healthcare or finance.

A load balancer sits between the users and the servers, distributing traffic among multiple components (e.g., servers) to ensure optimal performance and prevent overloading any single server. The load balancer continuously monitors the health of each server by sending periodic "health check" signals to verify if a server is online and responsive. If the first server goes offline (e.g., due to a failure or scheduled maintenance), the load balancer detects this through failed health checks.

Once the system detects that the first server is no longer responsive, it activates a failover mechanism. The load balancer or failover system immediately reroutes traffic to a different server or component that is operational. This failover component has been preconfigured with the same applications or services as the offline server, ensuring that users experience minimal-to-no disruption in service. The system might reroute traffic to a server within the same region or even a different region, depending on how the cloud infrastructure is configured.

For seamless switching, cloud systems rely on redundancy, where multiple instances of a service are run on different servers or cloud components. In some cases, data replication ensures that all servers maintain synchronized states. For instance, databases and applications are continuously updated across multiple servers in real-time or near real-time, so that when one server fails, the system can switch to another server without data loss or inconsistency. In distributed systems, replication mechanisms like active-active replication or active-passive configurations ensure that multiple servers are ready to take over at any time.

In more complex systems, especially those distributed across multiple regions, DNS (Domain Name System) management can play a role in switching between servers. The system dynamically updates the DNS records to point to the IP address of a backup server when the primary server goes offline. This allows new requests to be directed to a different server seamlessly.

Many cloud systems also employ autoscaling, which automatically provisions new servers or decommissions them based on demand. If a server goes offline, the autoscaling system may dynamically allocate a new server or increase the capacity of existing servers to handle the load. This provides flexibility and resilience, ensuring that the system adapts to component failures without downtime.

For example, existing systems implement failover mechanism at the infrastructure layer or the application layer in cloud computing systems. At the infrastructure layer, failover mechanisms ensure the availability of physical or virtual resources such as servers, storage, and networking components. This layer handles load balancing, virtual machine redundancy, and network rerouting to prevent downtime. For instance, if a server or virtual machine fails, the infrastructure layer automatically shifts traffic or workloads to backup resources or other servers in different regions, ensuring that services remain available. At the application layer, failover mechanisms focus on maintaining the availability of the application itself. This includes distributing traffic across multiple instances of the application using load balancers, which detect when an instance fails and redirect requests to healthy instances.

In contrast, at the data layer, implementing a failover mechanism raises novel technical challenges due to the complexities of maintaining data consistency, data integrity, and/or data redundancy such as database replication. The data layer is generally considered a challenging layer for implementing a failover mechanism due to the complexities involved in maintaining data consistency, integrity, and synchronization across distributed systems. Unlike the infrastructure or application layers, where failover often involves switching between stateless components, the data layer is inherently stateful. This means that it continuously processes and stores critical transactional data, making it difficult to replicate or transfer without risking data loss or corruption.

Failover at the data layer requires real-time replication across multiple databases or storage systems, which introduces significant challenges related to latency and synchronization. If a failover occurs during a transaction, there is a risk that data could become inconsistent or incomplete, leading to data integrity issues. Furthermore, the CAP theorem (Consistency, Availability, and Partition Tolerance) highlights that distributed systems must sacrifice one of these properties, and implementing failover at the data layer often means sacrificing consistency to maintain availability, which can be unacceptable in use cases like financial transactions or healthcare data. Additionally, ensuring that all transactions are fully completed before switching to a backup system is a complex task, and managing in-progress operations across different nodes or regions further complicates the failover process. Because of these challenges, it's much more effective to implement failover mechanisms at the infrastructure or application layers, where resources are more easily replaced or rerouted without compromising the accuracy or integrity of critical data.

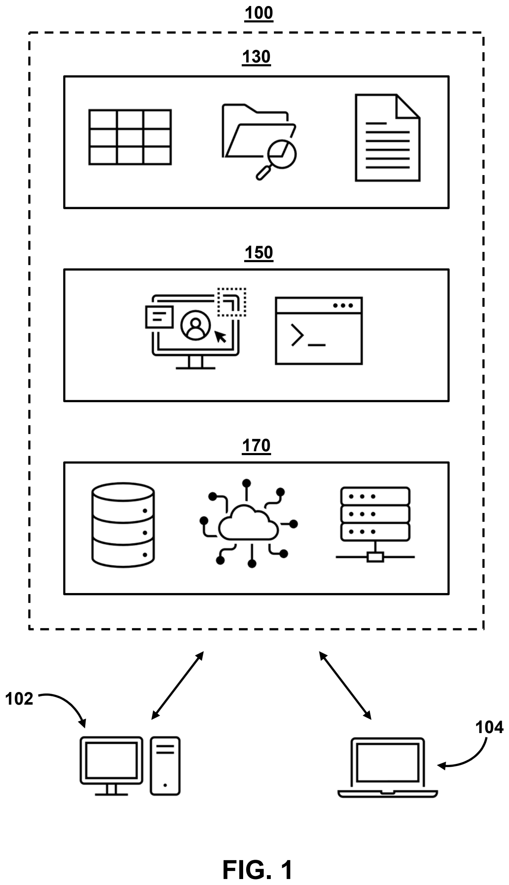

FIG. 1 shows an illustrative diagram for a multi-layered architecture of a cloud service provider for a cloud computing network, in accordance with one or more embodiments. For example, FIG. 1 shows a layered architecture for providing cloud computing services. Cloud computing services refer to the delivery of computing resources, applications, and infrastructure over the internet, allowing users to access and use technology without the need to own or manage the underlying hardware and software. These services are typically provided on a pay-as-you-go basis, enabling businesses and individuals to scale resources up or down based on demand. Cloud computing services are broadly categorized into three primary models: Infrastructure as a Service (IaaS), Platform as a Service (PaaS), and Software as a Service (SaaS). IaaS offers basic virtualized infrastructure, such as virtual machines, storage, and networking. PaaS provides a platform where developers can build, deploy, and manage applications without worrying about managing the underlying infrastructure. SaaS delivers fully functional software applications over the internet, typically accessible through web browsers.

As described herein, a cloud component may comprise any resource or portion thereof used to provider cloud computing services. Examples of components in cloud computing services include virtual machines (VMs), which are part of IaaS, allowing users to run their own applications and operating systems in a virtualized environment. Storage solutions provide scalable storage resources where users can store and retrieve data. Databases offered as a service are part of the PaaS model, where users can access, query, and manage databases without worrying about the hardware or software management. Web applications are examples of SaaS, where users can access fully functional software hosted in the cloud. Other cloud components include content delivery networks (CDNs), load balancers, API gateways, and container orchestration tools like Kubernetes, all of which are designed to enhance performance, scalability, and ease of use in cloud environments.

As shown in FIG. 1, cloud service user 102 and cloud service user 104 are accessing cloud computing services from a cloud computing service provider. Cloud service user 102 and cloud service user 104 are illustrated as devices comprising user interfaces. As referred to herein, a "user interface" may comprise a human-computer interaction and communication in a device and may include display screens, keyboards, a mouse, and the appearance of a desktop. For example, a user interface may comprise a way a user interacts with an application or a website.

As referred to herein, "content" should be understood to mean an electronically consumable user asset, such as Internet content (e.g., streaming content, downloadable content, Webcasts, etc.), video clips, audio, content information, pictures, rotating images, documents, playlists, websites, articles, books, electronic books, blogs, advertisements, chat sessions, social media content, applications, games, and/or any other media or multimedia and/or combination of the same. Content may be recorded, played, displayed, or accessed by user devices, but can also be part of a live performance. Furthermore, user generated content may include content created and/or consumed by a user. For example, user generated content may include content created by another, but consumed and/or published by the user.

The system may monitor content generated by the user to generate user profile data. As referred to herein, "a user profile" and/or "user profile data" may comprise data actively and/or passively collected about a user. For example, the user profile data may comprise content generated by the user and a user characteristic for the user. A user profile may be content consumed and/or created by a user.

User profile data may also include a user characteristic. As referred to herein, "a user characteristic" may include information about a user and/or information included in a directory of stored user settings, preferences, and information for the user. For example, a user profile may have the settings for the user's installed programs and operating system. In some embodiments, the user profile may be a visual display of personal data associated with a specific user, or a customized desktop environment. In some embodiments, the user profile may be digital representation of a person's identity. The data in the user profile may be generated based on the system actively or passively monitoring the user.

In layered architecture 100, infrastructure layer 170, application layer 150, and data layer 130 are interdependent, each playing a distinct role while supporting the functionality of the overall system. These layers are arranged in a hierarchical manner, with infrastructure layer 170 at the base, application layer 150 above it, and data layer 130 interacting across both, depending on the system's design.

Infrastructure layer 170 is the foundation of the system. It provides the physical and virtual resources such as servers, networking, storage, and compute power required to run applications and store data. This layer is responsible for provisioning, scaling, and managing the resources that keep the entire system operational. In cloud computing, this includes virtual machines, containers, load balancers, and network management tools that allow applications and services to function smoothly. Essentially, infrastructure layer 170 may manage the hardware and virtual environment that supports the higher layers.

Application layer 150 sits above infrastructure layer 170 and delivers the actual software functionality to users. This layer contains the business logic, services, APIs, and user interfaces that interact with both users and the underlying infrastructure. It processes user requests, handles workflows, and executes the core functions of the system, whether that be web services, mobile apps, or enterprise software. Application layer 150 depends on infrastructure layer 170 to provide the necessary resources (e.g., compute power, memory) to execute its functions but remains distinct by focusing on the logic and experience provided to end-users.

Data layer 130 interacts with both infrastructure layer 170 and application layer 150 by managing the storage, retrieval, and manipulation of data. It encompasses databases, file systems, and data repositories that store the information applications need to process. Data layer 130 ensures that data is stored securely, can be accessed quickly, and remains consistent across operations. It plays a critical role in supporting the application layer 150 by providing the necessary data for processing user inputs and generating outputs. Data layer 130 also relies on infrastructure layer 170 to provide storage resources, replication mechanisms, and backup strategies, ensuring the availability and durability of the stored data.

These three layers are different in their functions and scope. Infrastructure layer 170 deals with managing physical and virtual resources, application layer 150 focuses on running and delivering software services, and data layer 130 manages the handling and persistence of data. Together, they form a structured, layered architecture that ensures the system operates efficiently and is scalable, secure, and resilient. Each layer abstracts complexity from the one below it, allowing each to focus on its specific responsibilities, which makes troubleshooting, scaling, and management more efficient within the system.

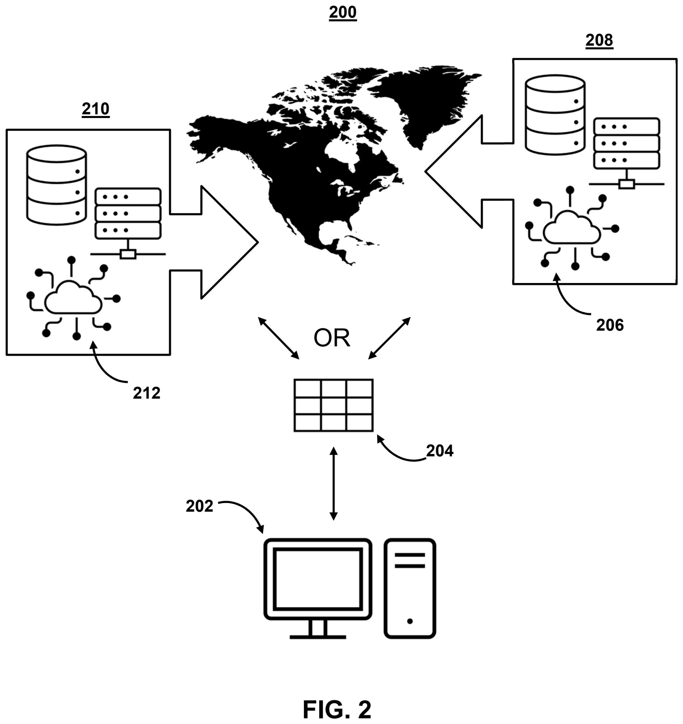

FIG. 2 shows an illustrative diagram for switching between cloud components, in accordance with one or more embodiments. For example, system 200 may comprise a cloud service provider providing a cloud computing network. A stateful component in a system or network may be a component that maintains or tracks information about its current state across multiple interactions or sessions. Unlike a stateless component, which processes each request independently without retaining any information between requests, a stateful component remembers previous interactions and uses that data to inform future actions. This means that stateful components keep track of things like user sessions, active transactions, cached data, or any other context that persists over time.

For example, in a cloud environment, a stateful component could be a database instance, session manager, or transaction processor that holds ongoing data between requests, ensuring that a user's activities remain consistent, such as during a shopping cart session in an e-commerce platform or a multi-step workflow in an enterprise application. Stateful components are essential for applications that require continuity of data and transactions, where losing the state could result in data inconsistencies, broken workflows, or a poor user experience. Managing stateful components is more complex than stateless ones, as they often require data replication, backups, and failover strategies to ensure high availability and consistency, particularly in distributed systems where different geographic regions or nodes may need to maintain synchronized state information.

System 200 may serve, by a cloud service provider of a cloud computing network, cloud service user 202 using stateful component 206 in a data layer of the cloud computing network, wherein stateful component 206 corresponds to geographic subset of components 208 in the cloud computing network.

System 200 may serve cloud service user 202 using stateful component 206 to deliver content, including time-series data. As described herein, "time-series data" may include a sequence of data points that occur in successive order over some period of time. In some embodiments, time-series data may be contrasted with cross-sectional data, which captures a point-in-time. A time series can be taken on any variable that changes over time. The system may use a time series to track the variable (e.g., price) of an asset (e.g., security) over time. This can be tracked over the short term, such as the price of a security on the hour over the course of a business day, or the long term, such as the price of a security at close on the last day of every month over the course of five years. The system may generate a time series analysis. For example, a time series analysis may be useful to see how a given asset, security, or economic variable changes over time. It can also be used to examine how the changes associated with the chosen data point compare to shifts in other variables over the same time period. For example, with regards to retail loss, the system may receive time series data for the various sub-segments indicating daily values for theft, product returns, etc.

The time-series analysis may determine various trends such as a secular trend, which describes the movement along the term, a seasonal variation, which represents seasonal changes, cyclical fluctuations, which correspond to periodical but not seasonal variations, and irregular variations, which are other nonrandom sources of variations of series. The system may maintain correlations for this data during modeling. In particular, the system may maintain correlations through non-normalization as normalizing data inherently changes the underlying data which may render correlations, if any, undetectable and/or lead to the detection of false positive correlations. For example, modeling techniques (and the predictions generated by them), such as rarefying (e.g., resampling as if each sample has the same total counts), total sum scaling (e.g., dividing counts by the sequencing depth), and others, and the performance of some strongly parametric approaches, depends heavily on the normalization choices. Thus, normalization may lead to lower model performance and more model errors. The use of a non-parametric bias test alleviates the need for normalization, while still allowing the methods and systems to determine a respective proportion of error detections for each of the plurality of time-series data component models. Through this unconventional arrangement and architecture, the limitations of the conventional systems are overcome. For example, non-parametric bias tests are robust to irregular distributions, while providing an allowance for covariate adjustment. Since no distributional assumptions are made, these tests may be applied to data that has been processed under any normalization strategy or not processed under a normalization process at all.

As referred to herein, "a data stream" may refer to data that is received from a data source that is indexed or archived by time. This may include streaming data (e.g., as found in streaming media files) or may refer to data that is received from one or more sources over time (e.g., either continuously or in a sporadic nature). A data stream segment may refer to a state or instance of the data stream. For example, a state or instance may refer to a current set of data corresponding to a given time increment or index value. For example, the system may receive time series data as a data stream. A given increment (or instance) of the time series data may correspond to a data stream segment.

System 200 may process a request (e.g., issued by cloud service user 202) to change from stateful component 206 to stateful component 212 in the data layer (e.g., data layer 130 (FIG. 1)), wherein stateful component 212 corresponds to geographic subset of components 210 in the cloud computing network. For example, when system 200 processes a request from a cloud service user to change from stateful component 206 to stateful component 212 in the data layer, where stateful component 212 corresponds to a different geographic subset of components (e.g., geographic subset of components 210) in the cloud computing network, system 200 may follow a structured process to ensure data integrity and continuity. System 200 may begin by identifying stateful component 206, which is responsible for managing the data of cloud service user 202 and transactions in the initial geographic region (e.g., geographic subset of components 208). Stateful component 206 typically holds information about active sessions, user data, and ongoing processes, making it critical to ensure a smooth transition to stateful component 212.

System 200 must ensure that the data stored in stateful component 206 is properly synchronized or transferred to stateful component 212, located in a different geographic region (e.g., geographic subset of components 210). To achieve this, system 200 first replicates the current state of the data from stateful component 206 to stateful component 212. This involves copying all relevant data, including the state of active processes, transactions, and any associated metadata, to ensure the second component has an exact and up-to-date copy of the user's data.

Once the replication is completed and stateful component 212 is fully synchronized, system 200 initiates a switch-over process. This involves updating the routing tables (e.g., routing table 204) and redirecting requests from stateful component 206 to stateful component 212, ensuring that any new requests or ongoing operations are now handled by stateful component 212. Throughout this process, system 200 may also perform validations, conflict checks, and/or health checks on stateful component 212 to confirm it is fully operational and ready to take over from the first. To maintain data consistency, system 200 may implement transactional integrity checks to ensure that no data is lost or corrupted during the transition. If stateful component 206 is still processing active requests, these communications must be either completed or safely paused and transferred to stateful component 212. Once system 200 verifies that stateful component 212 has successfully taken over the workload, the stateful component 206 can be decommissioned or reassigned for other tasks within the network. By following this approach, the system ensures a smooth and secure transition between geographic subsets of components in the data layer, maintaining the availability and consistency of the user's data and ensuring that the switch is transparent to the user.

In some embodiments, routing table 204 in a cloud computing network is a data structure that defines the paths or routes that network traffic should take to reach different cloud components, such as virtual machines, databases, or storage systems. Routing table 204 contains a list of network destinations (IP addresses or subnets) and the corresponding next hop or gateway that traffic must go through to reach its target. Each entry in routing table 204 tells the network how to forward packets to ensure they reach their destination efficiently. In a cloud environment, routing table 204 is critical for directing communications between different cloud components that may reside in various geographic regions or subnets within the cloud provider's infrastructure. For instance, when a request is made to access data stored in a database located in a different region, routing table 204 determines the appropriate path that the request should take, passing through various network gateways until it reaches the database. Routing table 204 ensures that the network traffic is routed optimally and reaches the intended component without delays or failures.

Routing table 204 is typically updated dynamically based on changes in the network. This could be due to the addition of new cloud components (e.g., when a new virtual machine is spun up), network topology changes, or failover situations. Cloud providers often implement routing protocols like BGP (Border Gateway Protocol) or OSPF (Open Shortest Path First), which allow routing tables to be updated automatically when changes occur. In other cases, network administrators or cloud orchestration tools may manually update routing tables to reflect new paths or changes in network structure. By updating routing table 204 promptly, the cloud network ensures that communication between components remains smooth and efficient, even as the underlying infrastructure evolves or scales.

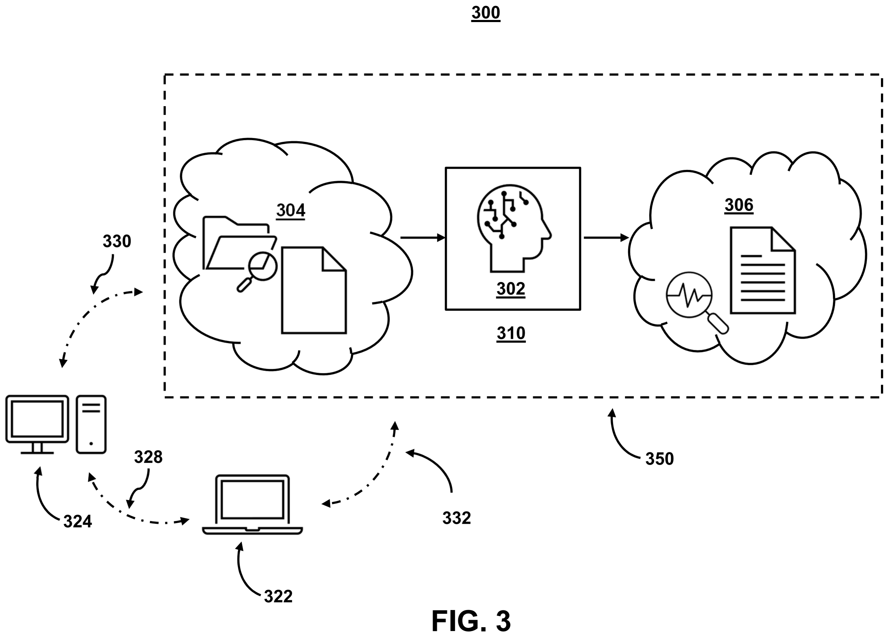

FIG. 3 shows illustrative components for a system used to improve component access for cloud service users, in accordance with one or more embodiments. For example, FIG. 3 may show illustrative components for switching between cloud components. As shown in FIG. 3, system 300 may include mobile device 322 and user terminal 324. While shown as a laptop computer and personal computer, respectively, in FIG. 3, it should be noted that mobile device 322 and user terminal 324 may be any computing device, including, but not limited to, a smartphone, a tablet computer, a hand-held computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

In some embodiments, system 300 and/or one or more models herein may be implemented using an application specific integrated circuit. An integrated circuit may be a small electronic device made of semiconductor material, typically silicon, that contains a large number of microscopic electronic components such as transistors, resistors, capacitors, and diodes. These components are interconnected to perform a specific function or set of functions. Integrated circuits can be classified into various types based on their functionality, such as analog, digital, and mixed-signal ICs. The transistors within an IC are the primary building blocks, as they act as switches or amplifiers for electronic signals. The other components, like resistors and capacitors, are used for controlling voltage, current, and timing within the circuit. System 300 may design the integrated circuit to be application specific such that design of the circuit is customized for a given application. In some embodiments, system 300 may use an integrated circuit system where one or more integrated circuit are spread throughout a system, network, and/or one or more devices. In such case, the system design may ensure that the circuits are integrated with other electronic components like connectors, power supplies, and sensors to form a complete and functional electronic system. This integration allows for the implementation of sophisticated tasks in devices needed for one or more specified applications.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include both hardware devices and software components serve as critical cloud components that enable the delivery of cloud services and infrastructure. Hardware devices in a cloud network typically include servers, storage devices, and networking equipment. Servers are the physical machines that host virtualized resources, such as virtual machines (VMs) or containers, where applications run. These servers can be located in vast data centers operated by cloud providers like AWS, Google Cloud, or Microsoft Azure. Storage devices, such as solid-state drives (SSDs) and hard disk drives (HDDs), provide the necessary storage for data, databases, and file systems. Networking hardware includes routers, switches, and load balancers that ensure efficient traffic flow within the cloud infrastructure and between users and cloud services. These devices handle the physical routing of data, connecting different data centers, regions, and users across the globe.

Software devices or virtual components are equally essential and include virtual machines (VMs), containers, databases, content delivery networks (CDNs), and load balancers. Virtual machines are software-based emulations of physical computers that run applications and processes within the cloud. Containers (e.g., Docker) are lightweight, portable environments that package applications and their dependencies for easier deployment and scaling. Cloud databases like Amazon RDS or Google Cloud SQL are software-based systems that store and manage data efficiently, while CDNs distribute content to users from geographically dispersed servers to reduce latency. Virtual load balancers, like those provided by AWS Elastic Load Balancing or Azure Load Balancer, distribute incoming traffic across multiple servers to ensure optimal resource use and avoid overloading any single server.

Both hardware and software components in cloud computing networks work together to provide scalable, flexible, and reliable services. The hardware forms the foundation, while software components abstract and manage the complex processes needed for application hosting, data storage, networking, and service delivery.

Cloud components 310 may include model 302, which may be a machine learning model, artificial intelligence model, etc. (which may be referred collectively as "models" herein). In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review as the process by which the results are made may be unknown or obscured. This obscurity can create hurdles for identifying errors in the results, as well as improving the models providing the results.

Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., a routing configuration).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., a routing configuration).

In some embodiments, the model (e.g., model 302) may automatically perform actions based on outputs 306. In some embodiments, the model (e.g., model 302) may not perform any actions. The output of the model (e.g., model 302) may be used to improve cloud component accessibility.

An artificial intelligence model can be trained on historic data to generate predictions for routing table updates, such as changes to routing configurations for instituting a failover mechanism in a cloud computing environment, by using machine learning techniques to analyze patterns in past network behavior, component failures, and traffic distribution. The model is trained using a dataset that includes historical information such as network traffic logs, system performance metrics, previous failover events, latency data, and routing table changes over time.

During training, the model learns to identify patterns and correlations between these factors and the routing changes that were made to ensure network continuity or optimize performance. For instance, it can detect that certain network conditions, such as increasing latency or high server load, are typically followed by specific routing table adjustments to reroute traffic to backup components or other available resources. The model is designed to understand these conditions and predict when a similar situation might arise in the future, proactively suggesting or automating routing updates before a failure occurs.

To achieve this, supervised learning techniques are often used, where the model is fed both the input data (e.g., network performance metrics and component statuses) and the output data (e.g., routing table updates made by administrators during past failover events). The model learns to map specific network conditions to the appropriate routing changes, enabling it to generate predictive updates. As the model continues to learn from new data, including ongoing network conditions and failover events, it becomes more accurate in identifying early signs of network stress or failures and can suggest routing table changes in real time.

Once trained, the model can automate routing decisions in dynamic cloud environments by continuously monitoring network traffic, predicting when failover mechanisms need to be activated, and updating routing tables to reroute traffic to secondary components or alternate geographic locations before performance issues escalate. This proactive approach helps minimize downtime, optimize network performance, and reduce manual intervention during network outages or failures.

In some embodiments, the system may generate predictions related to financial services. For example, the system may use one or more models and/or application to process a variety of data to generate predictions for tasks such as payment card eligibility determinations, fraud detection, and/or determining rates for auto-finance applications. For credit card eligibility, the model may use data such as the applicant's credit score, income, employment history, debt-to-income ratio, and past credit history. This data helps the model predict the likelihood of the applicant repaying the credit card debt. For fraud detection, models analyze transaction data, including the amount, location, frequency, and pattern of transactions. They compare these patterns to known fraudulent behavior to identify potentially fraudulent activities. For determining auto-finance rates, models might use the applicant's credit score, loan amount, loan term, vehicle details, and market interest rates. The data used by these models comes from various sources, including credit bureaus, financial institutions, customer-provided information, transaction records, and public records. By analyzing these data points, models can make informed predictions and decisions that help financial institutions manage risk, provide appropriate services, and enhance customer satisfaction.

In some embodiments, the model may process received data through several stages. For example, the model may collect and aggregate data from various sources (e.g., a user account, industry data, third-party data sources, etc.). The system may ensure the data is cleaned and preprocessed to handle any missing and/or inconsistent information. This preprocessing may include normalizing numerical data, encoding categorical variables, and applying techniques to handle outliers. The model may then use feature engineering to identify and create relevant features that can improve its predictive power. For instance, the system may derive new variables from existing ones, such as calculating the debt-to-income ratio from debt and income data.

Once the data is prepared, the system feeds the data into the model, which could be an artificial intelligence algorithm such as logistic regression, decision trees, and/or neural networks. The model may be trained on historical data, learning patterns, and/or relationships between input features and the target outcomes. During this training process, the system may adjust the model parameters to minimize prediction errors. After training, the system may validate the model and test the model using separate data sets to ensure the model has a predetermined and/or threshold accuracy and generalizability.

In some embodiments, the system may use specialized predictions based on the task. Additionally or alternatively, the system may adjust the inputs and/or outputs based on the determinations and/or predictions required. For example, for credit card eligibility, the model may evaluate the applicant's likelihood of defaulting on payments. In fraud detection, the model may identify anomalies and patterns indicative of fraudulent behavior. In auto-finance rate determination, the model may predict the risk associated with lending to an individual and adjusts the interest rates accordingly. In some embodiments, the entire process may be iterative, with models continually updated and refined as new data becomes available, ensuring they remain effective in making accurate and reliable predictions.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be a REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

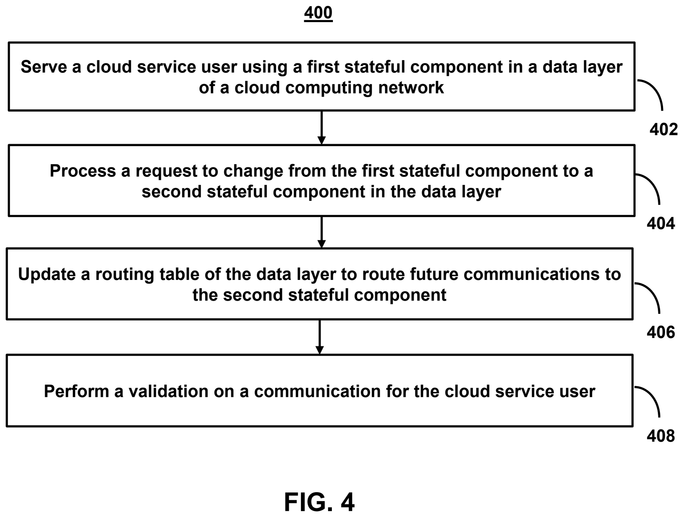

FIG. 4 shows a flowchart of the steps involved in improving component access for cloud service users, in accordance with one or more embodiments. For example, the system may use process 400 (e.g., as implemented on one or more system components described above) in order to provide a failover mechanism for cloud components via a data layer. As one example, process 400 enables users to perform multi-writes and automated failover at the data layer as a unified solution across regions, addressing a critical limitation in AWS-managed RDS (Relational Database Service) cloud services for SQL databases. Unlike traditional AWS RDS deployments, which primarily support read replicas across regions but lack true multi-primary write capabilities, process 400 is designed to function within an AWS Aurora global cluster (PostgreSQL). To achieve bidirectional data replication, the system leverages Oracle GoldenGate deployed on AWS EC2 instances, ensuring seamless data synchronization between source and target databases across different regions. This configuration allows for real-time, conflict-free multi-write operations, enabling users to perform read and write transactions across multiple regions without risking data inconsistency. Additionally, in the event of a regional failure, process 400 facilitates an automated failover mechanism by continuously monitoring database health and dynamically redirecting traffic to the next available active node. This approach not only enhances system resilience and availability but also ensures minimal downtime, providing a robust alternative to native AWS RDS solutions that lack true multi-region write capabilities.

At step 402, process 400 (e.g., using one or more components described above) serves a cloud service user using a first stateful component in a data layer of a cloud computing network. For example, the system may serve, by a cloud service provider of a cloud computing network, a first cloud service user using a first stateful component in a data layer of the cloud computing network, wherein the first stateful component corresponds to a first geographic subset of components in the cloud computing network.

In some embodiments, the system may serve the first cloud service user using the first stateful component by retrieving a predetermined list of components in the cloud computing network accessible by the first cloud service user and determining whether to serve the first cloud service user with the first stateful component based on the first stateful component corresponding to the predetermined list of components in the cloud computing network accessible by the first cloud service user. For example, the system serves the first cloud service user using the first stateful component by first retrieving a predetermined list of components in the cloud computing network that are accessible to the user. This list contains the cloud resources, such as servers, databases, or other stateful components, that have been provisioned or authorized for use by the first cloud service user, based on their subscription plan, geographic restrictions, or organizational policies. Once the system retrieves this list, it evaluates which components can be used to fulfill the user's request. The system then determines whether to serve the first cloud service user with the first stateful component by checking whether the component corresponds to the resources listed in the predetermined accessible components. If the first stateful component-such as a database or session manager-exists within the authorized list and is capable of handling the user's request (for example, it has the necessary data or processing capabilities), the system proceeds to allocate that component to serve the user. By mapping the user's request to a stateful component that matches the available resources on the predetermined list, the system ensures that the user's data and transactions are processed by a component that is authorized, available, and capable of maintaining the necessary state (such as session persistence or data integrity). This process ensures that the service provided is consistent with the user's permissions and the infrastructure resources available to them in the cloud computing network.

In some embodiments, the system may serve the first cloud service user using the first stateful component by retrieving a first geographic location of the first cloud service user and determining whether to serve the first cloud service user with the first stateful component based on the first geographic location corresponding to a geographic location of the first geographic subset of components. A system serves the first cloud service user using the first stateful component by first retrieving the first geographic location of the user. This location could be determined based on the user's IP address, account settings, or other location-tracking mechanisms within the cloud network. Once the system identifies the user's geographic location, it evaluates the available cloud components-specifically looking at geographic subsets of components, such as servers or databases that are closest to or most appropriate for the user's region. The system then determines whether to serve the first cloud service user with the first stateful component by comparing the user's geographic location to the geographic location of the first geographic subset of components. If the first stateful component, which may be a session manager, database, or any other resource needed to maintain persistent state, is located within the same geographic region as the user (or within a region that optimally serves the user based on performance or compliance factors), the system selects that component to serve the user's request. By aligning the user's geographic location with the appropriate geographically localized components, the system ensures that the service is optimized for latency, performance, and compliance with any data residency regulations. Serving the user from a component that is geographically close reduces network delays and ensures a faster, more responsive experience while maintaining the necessary stateful interactions, such as session persistence or real-time data updates, required by the user. This process helps balance both technical performance and compliance with regional data laws, ensuring a seamless and efficient service.

In some embodiments, the system may serve the first cloud service user using the first stateful component by retrieving a first network location of the first cloud service user and determining whether to serve the first network location using the first geographic subset of components or the second geographic subset of components. For example, the system serves the first cloud service user using the first stateful component by first retrieving the first network location of the user. This network location, often determined by the user's IP address or network identifier, provides the system with information about the user's proximity to different regions or data centers within the cloud infrastructure. The system uses this network location to evaluate which geographic subset of components is most appropriate for serving the user. Once the network location is retrieved, the system compares the first network location against the available geographic subsets of components within the cloud, such as the first geographic subset or the second geographic subset. These subsets are groups of servers, databases, or other resources that are regionally distributed to optimize performance and comply with data residency requirements. The system determines whether to serve the user using the first geographic subset of components or the second geographic subset by analyzing factors such as network latency, bandwidth, and geographic proximity. For example, if the first network location is closer to the first geographic subset, the system may decide to serve the user with a component from that subset to minimize latency and ensure faster response times. However, if the system detects that the first geographic subset is under heavy load, experiencing issues, or otherwise not optimal for the user's needs, it may choose to serve the user using the second geographic subset instead. This decision ensures that the user's experience remains seamless, balancing performance with availability by dynamically choosing the best location to route requests to the necessary stateful components, such as databases or session managers. By using the user's network location and determining the most efficient geographic subset of components to serve their requests, the system optimizes the overall user experience, ensuring low latency, high performance, and reliable access to the necessary resources.

At step 404, process 400 (e.g., using one or more components described above) processes a request to change from the first stateful component to a second stateful component in the data layer. For example, the system may process, from the first cloud service user, a first request to change from the first stateful component to a second stateful component in the data layer, wherein the second stateful component corresponds to a second geographic subset of components in the cloud computing network.

In some embodiments, the system may process the first request to change from the first stateful component to a second stateful component in the data layer by receiving, by the first cloud service user, one or more communications for the first cloud service user over the cloud computing network and detecting a disruption in the one or more communications. For example, the system may process the first request to change from the first stateful component to a second stateful component in the data layer by first receiving communications intended for the first cloud service user over the cloud computing network. These communications could include requests for data, updates, or interactions with cloud-based services that rely on the first stateful component, such as a database or session management system. As the system handles these communications, it continuously monitors the flow of data and interactions between the user and the first stateful component. During this process, the system may detect a disruption in one or more communications. This disruption could manifest as delays, packet loss, degraded performance, or a failure in communication between the user and the first stateful component. Once the system identifies this disruption, it recognizes that the first stateful component may no longer be optimal for serving the user's requests, potentially due to hardware failures, network issues, or component overload. Upon detecting this disruption, the system initiates the process to switch the user from the first stateful component to a second stateful component in the data layer. The second stateful component, typically part of a different geographic subset or a backup resource, is identified as capable of handling the user's data and maintaining the continuity of stateful interactions. The system updates the routing tables and reconfigures the necessary connections to ensure that subsequent communications are directed to the second stateful component, allowing the user to continue accessing cloud services without interruption. By detecting the disruption in the communications and dynamically switching to a backup or alternate stateful component, the system ensures high availability and resilience in the cloud environment, maintaining the user experience and protecting the integrity of ongoing operations.

At step 406, process 400 (e.g., using one or more components described above) updates a routing table of the data layer to route future communications to the second stateful component. For example, the system may, in response to processing the first request, update a routing table of the data layer to route future communications for the first cloud service user to the second stateful component.

In some embodiments, the system may update the routing table of the data layer to route future network communications for the first cloud service user to the second stateful component by, in response to receiving the first request, pausing one or more communications of the first cloud service user currently in transmission over the cloud computing network and adding the one or more communications to a user-specific queue for the first cloud service user. When a system receives the first request to change from the first stateful component to a second stateful component in the data layer, it begins the process of updating the routing table to ensure that future network communications for the first cloud service user are correctly routed to the new component. The first step in this process is to pause any ongoing communications that are currently in transmission over the cloud computing network for the first cloud service user. These communications might include data transfers, queries, or transactions that are dependent on the first stateful component. Once the communications are paused, the system temporarily moves these communications into a user-specific queue designated for the first cloud service user. This queue safely holds the communications while the system transitions between the first and second stateful components. By adding the communications to a queue, the system ensures that the data or requests are not lost or prematurely processed during the component switch. The queue essentially preserves the state of the user's interactions while waiting for the system to complete the routing update. With the communications queued, the system proceeds to update the routing table in the data layer. This update involves modifying the network routes so that all future communications for the first cloud service user are directed to the second stateful component. The routing table is adjusted to reflect the new path, ensuring that once the switch is made, any new requests or interactions from the user are automatically handled by the second stateful component. After the routing table has been successfully updated, the system retrieves the paused communications from the queue and routes them to the second stateful component for processing. This allows the user's previous requests and interactions to continue seamlessly on the new component without losing data or experiencing disruptions. By pausing, queuing, and carefully managing the transition, the system ensures a smooth update process that maintains the integrity of the user's ongoing communications while successfully routing all future traffic to the new component.

In some embodiments, the system may update the routing table of the data layer to route future network communications for the first cloud service user to the second stateful component by determining a length of time between a receipt of the first request and a current time, retrieving a threshold length of time for activating a routing table update, and comparing the length of time to the threshold length of time to determine whether to update the routing table. For example, the system updates the routing table of the data layer to route future network communications for the first cloud service user to the second stateful component by following a structured decision-making process based on time constraints. After receiving the first request to change from the first stateful component to the second stateful component, the system starts by determining the length of time that has passed between the receipt of the request and the current time. Next, the system retrieves a threshold length of time that has been predefined for activating routing table updates in response to component switches. This threshold represents the maximum acceptable time delay before the system needs to act on the request to avoid performance degradation, disruptions, or delays in user communications. The system then compares the calculated length of time that has elapsed since the request was received to the threshold length of time. If the elapsed time is less than or equal to the threshold, the system may wait or continue monitoring, ensuring that it doesn't trigger the routing table update prematurely. However, if the length of time exceeds the threshold, the system determines that it is necessary to immediately update the routing table to redirect future network communications to the second stateful component. By using this time-based comparison, the system ensures that routing table updates are made promptly and at the right moment, minimizing the risk of delayed communications or service interruptions. If the conditions for updating the routing table are met, the system modifies the network paths so that all subsequent data and interactions for the first cloud service user are routed to the second stateful component. This approach optimizes both performance and continuity, ensuring that the transition occurs within the acceptable time window while maintaining the integrity of the cloud service user's experience.

At step 408, process 400 (e.g., using one or more components described above) performs a validation on a communication for the cloud service user. For example, the system may, in response to updating the routing table, perform a first validation on a first communication for the first cloud service user, wherein the first communication was initiated prior to the first request being received. For example, when a system receives the first request to change from the first stateful component to a second stateful component in the data layer, it updates the routing table to ensure that future network communications for the first cloud service user are directed to the new component. The system begins this process by first pausing any ongoing communications of the first cloud service user that are currently in transmission over the cloud computing network. These paused communications could include in-progress data transfers, transactions, or requests that rely on the stateful interactions of the first component. To avoid data loss or disruption, the system temporarily moves the paused communications into a user-specific queue for the first cloud service user. This queue holds the communications while the system proceeds with the transition between components. By adding these communications to a queue, the system ensures that no data is lost or prematurely processed during the switch from the first stateful component to the second. Once the communications are safely queued, the system updates the routing table in the data layer to redirect future network communications for the first cloud service user to the second stateful component. This involves modifying the routing paths so that any new requests or interactions are automatically sent to the second stateful component, which is now responsible for maintaining the user's data and stateful interactions. After the routing table is updated, the system retrieves the queued communications and transmits them to the second stateful component, allowing them to be processed without any interruption. By pausing and queuing the communications during the transition, the system ensures that the switch between stateful components happens seamlessly, maintaining the integrity of the user's ongoing processes while preventing any data loss or service disruption. This approach helps maintain reliability and continuity in cloud service operations, especially when handling critical stateful interactions.

In some embodiments, the system may perform the first validation on the first communication for the first cloud service user by receiving, from the first cloud service user, a first hash of the first communication, generating, based on the first communication as received by the second stateful component, a second hash, and comparing the first hash to the second hash. To perform the first validation on the first communication for the first cloud service user, the system begins by receiving a first hash of the communication from the first cloud service user. This hash is a cryptographic representation of the original communication, ensuring that any alterations to the message can be easily detected. The hash is typically generated by the user's system or application before the communication is sent over the cloud network, acting as a fingerprint of the communication's contents. Once the system receives the first communication via the second stateful component, it generates a second hash based on the contents of the communication as received. This second hash is created using the same hashing algorithm that was used to generate the first hash, ensuring consistency between the two hashes. The system then compares the first hash to the second hash. If the two hashes match, it indicates that the communication has not been tampered with or altered during transmission, confirming its integrity. If the hashes do not match, the system flags the communication as potentially compromised, and further investigation or error handling may be initiated. By using this hashing comparison, the system ensures the integrity and authenticity of the communication between the first cloud service user and the second stateful component, providing a secure mechanism for validating that the communication was received accurately and without interference. This process is critical in maintaining trust in the transmission of data within a cloud computing environment.

In some embodiments, the system may perform the first validation on the first communication by determining the first communication is corrupted, and, in response to determining that the first communication is corrupted, querying the first cloud service user to resend the first communication. For example, the system may perform the first validation on the first communication by first analyzing the integrity of the communication to determine whether it has been corrupted during transmission. This can be done by comparing the expected data (e.g., a hash or checksum) sent by the first cloud service user with the data received by the system at the destination. If the system detects a mismatch, indicating that the data has been altered, incomplete, or corrupted in transit, it flags the communication as compromised. Upon determining that the first communication is corrupted, the system immediately initiates a corrective action by querying the first cloud service user to resend the communication. This involves sending an automated request or error message back to the user's system, notifying them that the communication could not be successfully validated and needs to be retransmitted. The request includes instructions for resending the communication to ensure that the system can receive an uncorrupted version. This validation process ensures that only complete and accurate data is processed or stored by the system. By detecting corruption early and requesting a resend, the system helps maintain data integrity and prevents further issues that could arise from processing incomplete or tampered communications. This method is essential for ensuring reliable interactions in cloud computing environments, particularly for stateful components that rely on accurate, ongoing data exchanges.

In some embodiments, the system may perform the first validation on the first communication by validating the first communication, and, in response to validating the first communication, serving, by the cloud service provider, the first cloud service user using the second stateful component. For example, the system may perform the first validation on the first communication by verifying its integrity and authenticity before processing the request further. This validation is typically done by checking the integrity of the communication through mechanisms such as comparing hashes, verifying digital signatures, or performing checksums. For example, if the first cloud service user provides a hash of the original communication, the system generates a corresponding hash from the received data and compares the two. If they match, it confirms that the communication was not altered during transmission, thereby validating the communication. Once the system successfully validates the first communication, it proceeds to serve the first cloud service user using the second stateful component. This involves directing the user's requests to the second stateful component, which could be a database, session manager, or any other cloud-based service that maintains the state necessary for the user's ongoing interactions. By ensuring that the communication is validated before switching to the second stateful component, the system guarantees that only authentic and untampered data is processed by the new component. This validation and subsequent service switch ensure data integrity while allowing the system to dynamically reroute user interactions without introducing errors or inconsistencies, ensuring a smooth transition to the second stateful component while maintaining the quality and reliability of the cloud service.

In some embodiments, the system may perform the first validation on the first communication by performing a first conflict check between the first communication and one or more communications initiated after the first request, and, in response to determining that the first communication is corrupted, querying the first cloud service user to resend the first communication. For example, the system may perform the first validation on the first communication by conducting a conflict check between the first communication and any one or more communications initiated after the first request. This conflict check ensures that no inconsistencies or overlapping data arise between the first communication and subsequent communications, which may affect the integrity of the data or actions taken by the system. The system compares the content, time stamps, or transaction IDs of the first communication against the newer communications to detect any potential conflicts, such as duplicated data, inconsistencies in state, or competing updates. If the system identifies that the first communication is corrupted during this conflict check-whether due to incomplete data, incorrect formatting, or inconsistencies with the later communications-it flags the communication as invalid. Upon determining this, the system queries the first cloud service user to resend the first communication. This query is typically an automated request that informs the user of the detected issue and prompts them to retransmit the communication, ensuring that the system receives an accurate and complete version. By performing this conflict check and requesting a resend in case of corruption, the system ensures data integrity and prevents conflicts or errors from affecting the processing of subsequent communications. This step is critical in maintaining the consistency and reliability of the data across stateful components, especially when managing concurrent or time-sensitive transactions in a cloud computing environment.

In some embodiments, the system may perform the first validation on the first communication by querying the first stateful component to determine whether the first stateful component is online and, in response to determining that the first stateful component is online, processing a second request to change from the second stateful component to the first stateful component. For example, the system may perform the first validation on the first communication by first querying the first stateful component to determine its current operational status. This query is designed to check whether the first stateful component, which was previously used by the first cloud service user, is online and available for handling further communications. This step ensures that the system has an accurate understanding of the component's availability before taking any further action. If the system determines that the first stateful component is indeed online and functioning correctly, it then proceeds to handle a second request from the first cloud service user, which involves switching back from the second stateful component to the first stateful component. This switch may be necessary if the first component is the preferred or more optimal resource for handling the user's ongoing communications, based on performance, geographic proximity, or other factors. In response to determining that the first stateful component is online, the system updates its routing tables and configurations to process future communications through the first stateful component, ensuring that the transition is seamless. By verifying the first component's status before processing the second request, the system ensures that communications are directed to the most appropriate resource, maintaining continuity, performance, and data integrity across components. This approach minimizes disruption to the user's experience and ensures that service is dynamically adjusted based on the current state of the components in the cloud network.

In some embodiments, the system may perform the first validation on the first communication by querying the first stateful component to determine whether the first stateful component is online and, in response to determining that the first stateful component is online, processing a second request to change from the second stateful component to the first stateful component. For example, the system may perform the first validation on the first communication by querying the first stateful component to verify its operational status. This process begins by sending a query to the first stateful component to determine whether it is online and fully functional. The system checks for signs of availability, such as receiving a response or detecting active network activity, to confirm that the component is capable of processing communications. This step is crucial to ensure that the first stateful component can handle the user's data or requests effectively. Upon confirming that the first stateful component is online, the system proceeds to process a second request from the first cloud service user. This second request typically involves switching back from the second stateful component to the first stateful component. The system updates its routing configuration and redirects future communications back to the first stateful component, recognizing that it is now the preferred or optimal resource for the user's operations. This transition might be necessary due to factors like geographic proximity, better performance, or resource availability in the first stateful component. By validating the operational status of the first stateful component before executing the second request, the system ensures a smooth transition without service disruption. This approach guarantees that communications are routed efficiently and data integrity is maintained across both stateful components, providing the cloud service user with a seamless experience as the system dynamically adapts to component availability.

In some embodiments, the system may perform the first validation on the first communication by querying the first stateful component to determine whether the first stateful component is online and, in response to determining that the first stateful component is online, processing a second request to change from the second stateful component to the first stateful component. For example, the system performs the first validation on the first communication by querying the first stateful component to check its operational status and determine if it is online. This query is sent to the first stateful component to assess its availability, ensuring that it is active and capable of handling requests. The system waits for a response from the first stateful component, which confirms whether it is functioning correctly. This validation step is crucial to ensure that the system can switch communications back to the first stateful component without causing disruptions. Once the system determines that the first stateful component is online, it processes a second request from the first cloud service user to switch back from the second stateful component to the first. The system updates its internal routing tables or configurations to reroute all future communications and data processing tasks to the first stateful component. This transition ensures that the user is now served by the originally preferred component, which may be optimal due to factors like improved performance, proximity, or resource efficiency. By performing this validation and checking the first stateful component's status before making the switch, the system ensures a smooth and reliable changeover, maintaining continuity and data integrity while minimizing potential disruptions for the cloud service user.

In some embodiments, the system may process the first communication using the second stateful component, determine that the first stateful component is online, reestablish service for the first cloud service user with the first stateful component, and perform a first conflict check between a first state of the first stateful component and a second state of the second stateful component. For example, the system may begin by processing the first communication from the first cloud service user using the second stateful component. This component handles the user's requests, maintaining the state of the user's session, data, or interactions. While the system continues to operate through the second stateful component, it periodically checks the status of the first stateful component to determine if it is back online and ready for use. Upon confirming that the first stateful component is online and fully operational, the system proceeds to reestablish service for the user by switching from the second stateful component back to the first stateful component, which may be preferable due to factors like geographic proximity, performance, or cost-efficiency. To ensure a smooth transition, the system performs a first conflict check between the first state of the first stateful component and the second state of the second stateful component. This conflict check involves comparing the data or state maintained by both components, such as session data, transaction history, or any cached information, to ensure there are no inconsistencies or data conflicts. For example, the system might verify that any updates made while the second component was active are synchronized with the first component, ensuring that the most recent state is preserved and applied. If the system detects any discrepancies during this conflict check, it resolves the conflicts by merging the data or choosing the most recent and valid state, depending on the conflict resolution strategy in place. Once the conflict check is complete and any necessary adjustments are made, the system finalizes the transition, ensuring that the first cloud service user is now fully served by the first stateful component, with no data loss or inconsistencies. This approach ensures data integrity and continuity of service, providing a seamless experience for the user even during component transitions.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for improving component access for cloud service users.
2. The method of any one of the preceding embodiments, further comprising: serving, by a cloud service provider of a cloud computing network, a first cloud service user using a first stateful component in a data layer of the cloud computing network, wherein the first stateful component corresponds to a first geographic subset of components in the cloud computing network; processing, from the first cloud service user, a first request to change from the first stateful component to a second stateful component in the data layer, wherein the second stateful component corresponds to a second geographic subset of components in the cloud computing network; in response to processing the first request, updating a routing table of the data layer to route future communications for the first cloud service user to the second stateful component; and in response to updating the routing table, performing a first validation on a first communication for the first cloud service user, wherein the first communication was initiated prior to the first request being received.
3. The method of any one of the preceding embodiments, wherein serving the first cloud service user using the first stateful component further comprises: retrieving a predetermined list of components in the cloud computing network accessible by the first cloud service user; and determining whether to serve the first cloud service user with the first stateful component based on the first stateful component corresponding to the predetermined list of components in the cloud computing network accessible by the first cloud service user.
4. The method of any one of the preceding embodiments, wherein serving the first cloud service user using the first stateful component further comprises: retrieving a first geographic location of the first cloud service user; and determining whether to serve the first cloud service user with the first stateful component based on the first geographic location corresponding to a geographic location of the first geographic subset of components.
5. The method of any one of the preceding embodiments, wherein serving the first cloud service user using the first stateful component further comprises: retrieving a first network location of the first cloud service user; and determining whether to serve the first network location using the first geographic subset of components or the second geographic subset of components.
6. The method of any one of the preceding embodiments, wherein processing the first request to change from the first stateful component to a second stateful component in the data layer further comprises: receiving, by the first cloud service user, one or more communications for the first cloud service user over the cloud computing network; and detecting a disruption in the one or more communications.
7. The method of any one of the preceding embodiments, wherein updating the routing table of the data layer to route future network communications for the first cloud service user to the second stateful component further comprises: in response to receiving the first request, pausing one or more communications of the first cloud service user currently in transmission over the cloud computing network; and adding the one or more communications to a user-specific queue for the first cloud service user.
8. The method of any one of the preceding embodiments, wherein updating the routing table of the data layer to route future network communications for the first cloud service user to the second stateful component further comprises: determining a length of time between a receipt of the first request and a current time; retrieving a threshold length of time for activating a routing table update; and comparing the length of time to the threshold length of time to determine whether to update the routing table.
9. The method of any one of the preceding embodiments, wherein performing the first validation on the first communication for the first cloud service user further comprises: receiving, from the first cloud service user, a first hash of the first communication; generating, based on the first communication as received by the second stateful component, a second hash; and comparing the first hash to the second hash.
10. The method of any one of the preceding embodiments, wherein performing the first validation on the first communication further comprises: determining the first communication is corrupted; and in response to determining that the first communication is corrupted, querying the first cloud service user to resend the first communication.
11. The method of any one of the preceding embodiments, wherein performing the first validation on the first communication further comprises: validating the first communication; and in response to validating the first communication, serving, by the cloud service provider, the first cloud service user using the second stateful component.
12. The method of any one of the preceding embodiments, wherein performing the first validation on the first communication further comprises: performing a first conflict check between the first communication and one or more communications initiated after the first request; and in response to determining that the first communication is corrupted, querying the first cloud service user to resend the first communication.
13. The method of any one of the preceding embodiments, wherein performing the first validation on the first communication further comprises: querying the first stateful component to determine whether the first stateful component is online; and in response to determining that the first stateful component is online, processing a second request to change from the second stateful component to the first stateful component.
14. The method of any one of the preceding embodiments, wherein performing the first validation on the first communication further comprises: querying the first stateful component to determine whether the first stateful component is online; and in response to determining that the first stateful component is online, processing a second request to change from the second stateful component to the first stateful component.
15. The method of any one of the preceding embodiments, wherein performing the first validation on the first communication further comprises: querying the first stateful component to determine whether the first stateful component is online; and in response to determining that the first stateful component is online, processing a second request to change from the second stateful component to the first stateful component.
16. The method of any one of the preceding embodiments, further comprising: processing the first communication using the second stateful component; determining that the first stateful component is online; reestablishing service for the first cloud service user with the first stateful component; and performing a first conflict check between a first state of the first stateful component and a second state of the second stateful component.
17. One or more non-transitory, computer-readable mediums storing instructions that, when executed by a data processing apparatus, cause the data processing apparatus to perform operations comprising those of any of embodiments 1-16.
18. A system comprising one or more processors; and memory storing instructions that, when executed by the processors, cause the processors to effectuate operations comprising those of any of embodiments 1-16.
19. A system comprising means for performing any of embodiments 1-16.

## Claims

1. A system for improving component access for cloud service users, the system comprising:
one or more processors; and
one or more non-transitory, computer-readable media, comprising instructions that, when executed by the one or more processors, cause operations comprising:
serving, by a cloud service provider of a cloud computing network, a first cloud service user using a first stateful component in a data layer of the cloud computing network, wherein the first stateful component corresponds to a first geographic subset of components in the cloud computing network;
processing, from the first cloud service user, a first request to change from the first stateful component to a second stateful component in the data layer, wherein the second stateful component corresponds to a second geographic subset of components in the cloud computing network;
in response to processing the first request, updating a routing table of the data layer to route future communications for the first cloud service user to the second stateful component;
in response to updating the routing table, performing a first validation on a first communication for the first cloud service user, wherein the first communication was initiated prior to the first request being received; and
in response to completing the first validation, processing a second communication for the first cloud service user using the second stateful component.

2. A method for improving component access for cloud service users, the method comprising:
serving, by a cloud service provider of a cloud computing network, a first cloud service user using a first stateful component in a data layer of the cloud computing network, wherein the first stateful component corresponds to a first geographic subset of components in the cloud computing network;
processing, from the first cloud service user, a first request to change from the first stateful component to a second stateful component in the data layer, wherein the second stateful component corresponds to a second geographic subset of components in the cloud computing network;
in response to processing the first request, updating a routing table of the data layer to route future communications for the first cloud service user to the second stateful component; and
in response to updating the routing table, performing a first validation on a first communication for the first cloud service user, wherein the first communication was initiated prior to the first request being received.

3. The method of claim 2, wherein serving the first cloud service user using the first stateful component further comprises:
retrieving a predetermined list of components in the cloud computing network accessible by the first cloud service user; and
determining whether to serve the first cloud service user with the first stateful component based on the first stateful component corresponding to the predetermined list of components in the cloud computing network accessible by the first cloud service user.

4. The method of claim 2 or 3, wherein serving the first cloud service user using the first stateful component further comprises:
retrieving a first geographic location of the first cloud service user; and
determining whether to serve the first cloud service user with the first stateful component based on the first geographic location corresponding to a geographic location of the first geographic subset of components.

5. The method of any one of claims 2 to 4, wherein serving the first cloud service user using the first stateful component further comprises:
retrieving a first network location of the first cloud service user; and
determining whether to serve the first network location using the first geographic subset of components or the second geographic subset of components.

6. The method of any one of claims 2 to 5, wherein processing the first request to change from the first stateful component to a second stateful component in the data layer further comprises:
receiving, by the first cloud service user, one or more communications for the first cloud service user over the cloud computing network; and
detecting a disruption in the one or more communications.

7. The method of any one of claims 2 to 6, wherein updating the routing table of the data layer to route future network communications for the first cloud service user to the second stateful component further comprises:
in response to receiving the first request, pausing one or more communications of the first cloud service user currently in transmission over the cloud computing network; and
adding the one or more communications to a user-specific queue for the first cloud service user.

8. The method of any one of claims 2 to 7, wherein updating the routing table of the data layer to route future network communications for the first cloud service user to the second stateful component further comprises:
determining a length of time between a receipt of the first request and a current time;
retrieving a threshold length of time for activating a routing table update; and
comparing the length of time to the threshold length of time to determine whether to update the routing table.

9. The method of any one of claims 2 to 8, wherein performing the first validation on the first communication for the first cloud service user further comprises one or more of:
(a) receiving, from the first cloud service user, a first hash of the first communication; generating, based on the first communication as received by the second stateful component, a second hash; and comparing the first hash to the second hash; or
(b) determining the first communication is corrupted; and in response to determining that the first communication is corrupted, querying the first cloud service user to resend the first communication; or
(c) validating the first communication; and in response to validating the first communication, serving, by the cloud service provider, the first cloud service user using the second stateful component; or
(d) performing a first conflict check between the first communication and one or more communications initiated after the first request; and in response to determining that the first communication is corrupted, querying the first cloud service user to resend the first communication; or
(e) querying the first stateful component to determine whether the first stateful component is online; and in response to determining that the first stateful component is online, processing a second request to change from the second stateful component to the first stateful component.

10. The method of any one of claims 2 to 9, wherein performing the first validation on the first communication further comprises:
querying the first stateful component to determine whether the first stateful component is online; and
in response to determining that the first stateful component is online, processing a second request to change from the second stateful component to the first stateful component.

11. The method of any one of claims 2 to 10, further comprising:
processing the first communication using the second stateful component;
determining that the first stateful component is online;
reestablishing service for the first cloud service user with the first stateful component;
and
performing a first conflict check between a first state of the first stateful component and a second state of the second stateful component.

12. One or more non-transitory, computer-readable media, comprising instructions that, when executed by one or more processors, cause operations comprising:
serving, by a cloud service provider of a cloud computing network, a first cloud service user using a first stateful component in a data layer of the cloud computing network;
processing, from the first cloud service user, a first request to change from the first stateful component to a second stateful component in the data layer;
in response to processing the first request, updating the data layer to route future communications for the first cloud service user to the second stateful component; and
in response to updating the data layer, performing a first validation on a first communication for the first cloud service user, wherein the first communication was initiated prior to the first request being received.

13. The one or more non-transitory, computer-readable media of claim 12, wherein serving the first cloud service user using the first stateful component further comprises:
retrieving a predetermined list of components in the cloud computing network accessible by the first cloud service user; and
determining whether to serve the first cloud service user with the first stateful component based on the first stateful component corresponding to the predetermined list of components in the cloud computing network accessible by the first cloud service user.

14. The one or more non-transitory, computer-readable media of claim 12 or 13, wherein updating the data layer to route future network communications for the first cloud service user to the second stateful component further comprises:
determining a length of time between a receipt of the first request and a current time;
retrieving a threshold length of time for activating a data layer update; and
comparing the length of time to the threshold length of time to determine whether to update the data layer.

15. The one or more non-transitory, computer-readable media of any one of claims 12 to 14, wherein performing the first validation on the first communication further comprises:
querying the first stateful component to determine whether the first stateful component is online; and
in response to determining that the first stateful component is online, processing a second request to change from the second stateful component to the first stateful component.
